Europäisches Patentamt

**European Patent Office**

Office européen des brevets

(19)

(11) Publication number: **0 226 413**
A2

(12)

# EUROPEAN PATENT APPLICATION

(21) Application number: **86309503.0**

(22) Date of filing: **05.12.86**

(51) Int. Cl.⁴: **A 47 J 37/12**

(30) Priority: **06.12.85 US 805962**

(43) Date of publication of application:
**24.06.87 Bulletin 87/26**

(84) Designated Contracting States:
**AT BE CH DE FR GB IT LI LU NL SE**

(71) Applicant: **Oil Process Systems, Inc.**
**602 North Tacoma Street**
**Allentown Pennsylvania 18103(US)**

(72) Inventor: **Friedman, Bernard**
**2914 Fairview Street**
**Allentown, Pennsylvania 18104(US)**

(74) Representative: **Beresford, Keith Denis Lewis et al,**
**BERESFORD & Co. 2-5 Warwick Court High Holborn**
**London WC1R 5DJ(GB)**

(54) **Filter system.**

(57) A reusable filter bag is disclosed including a filtering surface (24, 42) having a porosity selected so as to filter impurities from used cooking oil flowing therethrough, and used in connection with a basket (12) for holding food to be cooked in a cooking vessel containing hot oil, with the filter bag having a configuration (14, 32) adapted to conform to the shape of the basket so that the filter bag can be removably supported inside the basket.

F I G. 2

The present invention relates to the filtration of cooking oil, and, more particularly, to a new and improved system for filtering used cooking oil in order to remove impurities therefrom.

Cooking oil used to cook various types of food is periodically filtered in order to remove impurities, such as particulate matter, from the used oil. In the past, two types of filter systems have, for the most part, been used: one type which employs throw-away paper filters and another type which employs reusable filter bags made from polyester or polytetrafluoroethylene (see, for instance, U.S. Patent Nos. 4,052,319, 4,448,686 and 4,462,915 which are owned by the assignee of the present application).

The throw-away paper filters have had only a limited amount of effectiveness. Although the reusable filter bags have proven to be more effective than the throw-away paper filters, the reusable filter bags have heretofore been used in combination with custom-made support frames specifically designed to permit the easy replacement of the bags (see U.S. Patent Nos. 4,052,319, 4,448,686 and 4,462,915) or with no frame at all (i.e., with the filter bags simply draped over the rim of a container). The provision of custom-made support frames is disadvantageous because it increases manufacturing costs. Mounting the filter bags directly on the rim of a container is also disadvantageous because the filter bags have to be large enough to fit over the entire container, thereby creating the possibility that the filter bags would be larger and therefore more costly than necessary.

The problems and disadvantages of the filter systems described above are overcome in accordance with the present invention by providing a reusable filter bag which is adapted for use in combination with a conventional cooking basket used to introduce food into a cooking vessel, such as a cooking fryer employed by restaurants and the like to cook french fries, fried chicken, etc. Because the conventional cooking basket is utilized as a support for the reusable filter bag, the present invention eliminates the need to provide a custom-made support frame or to size the filter bag such that it can fit over the rim of the entire cooking vessel. Thus, the present invention results in a simplified yet effective filter system.

According to the present invention, there is provided a reusable filter bag including a filtering surface having a porosity selected so as to filter impurities from used cooking oil flowing therethrough, the reusable filter bag adapted for use in connection with a basket adapted to hold food to be cooked in a cooking vessel containing the hot cooking oil by having a configuration adapted to conform to the shape of said basket, whereby said filter bag can be removably supported inside said basket.

In order that the present invention may be fully understood, it will now be described with reference to the accompanying drawings, in which:

Figure 1 is an exploded view of one exemplary embodiment of a filter system, including a frying basket and a filter bag, constructed in accordance with the present invention;

Figure 1A is an enlarged view of a portion of the frying basket illustrated in Figure 1;

Figure 2 is a perspective view of the filter system illustrated in Figure 1, the filter system being shown in its assembled state with portions being broken away to facilitate consideration and discussion; and

Figure 3 is a perspective view of a second embodiment of a filter bag adapted for use in connection with a frying basket similar to the one illustrated in Figures 1, 1A and 2.

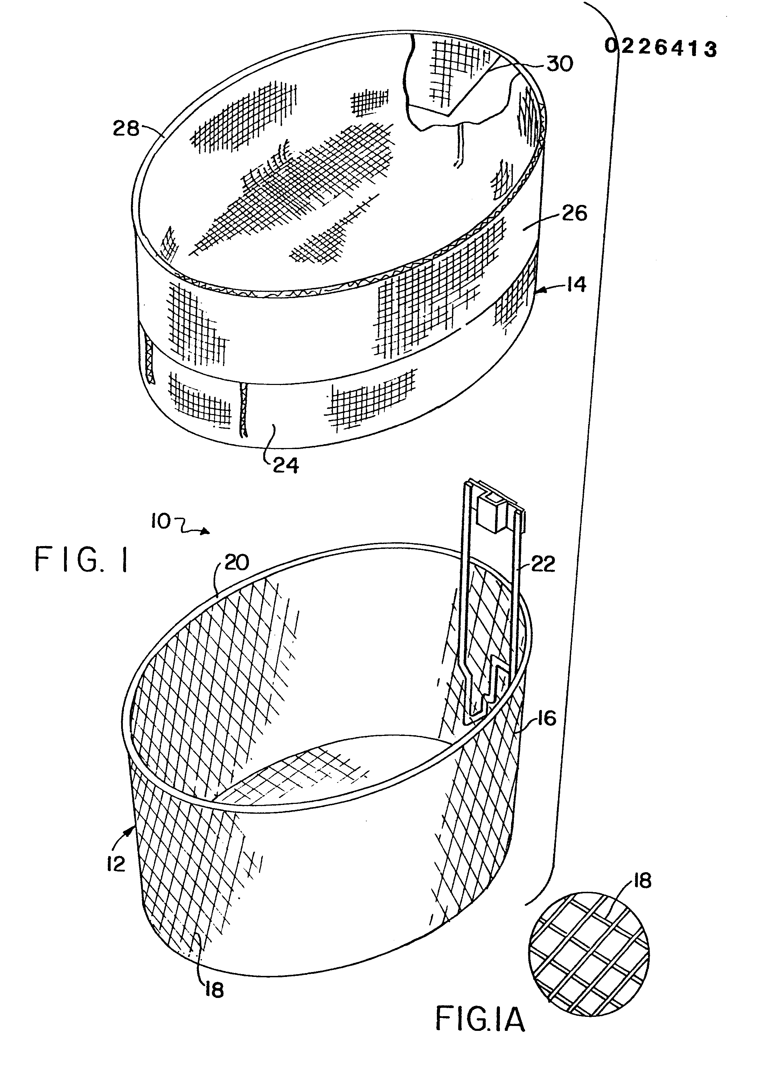

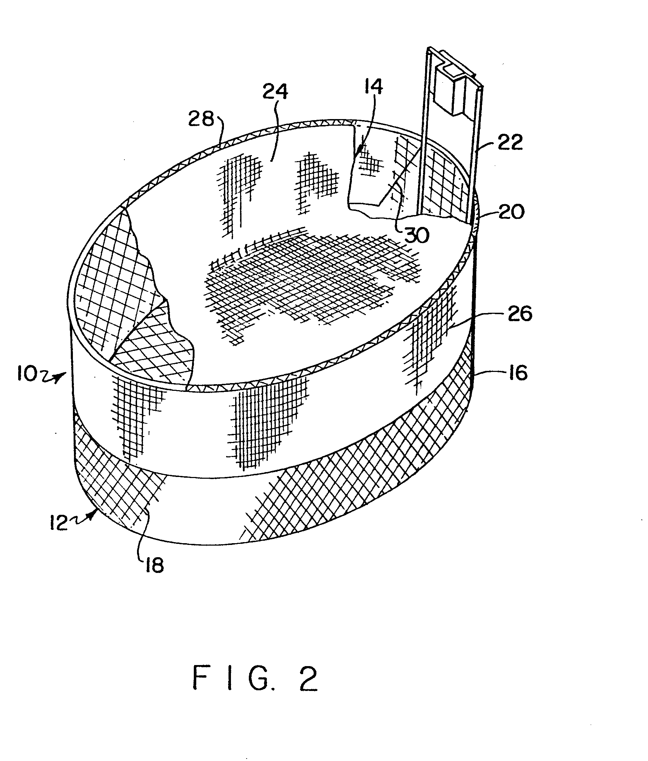

With reference to Figures 1, 1A and 2, there is shown a filter system 10 adapted to filter cooking oil in order to remove accumulated particulate matter from the oil.

The filter system 10 includes a conventional frying basket 12 and a reusable filter bag 14 adapted to fit inside a frying basket 12.

The frying basket 12 includes a body 16 made from a metal mesh 18 (see Figure 1A). The body 16 includes a rim 20 and a mounting bracket 22 adapted to mount the frying basket 12 in a cooking vessel (not shown), such as a standard cooking fryer.

The filter bag 14 includes a cup-shaped body 24 made from a single piece of a substantially porous material, such as polytetrafluoroethylene or other fluorocarbon polymers, preferably the variety sold with the trademark TEFLON, or polyester, preferably the variety sold with the trademark MYLAR, which can withstand the elevated temperatures encountered in the filtration of hot cooking oil (i.e., temperatures generally in the range of from about 162.5°C to about 190°C) and which has a uniform pore size in a range from about 40 microns to about 60 microns and an open area in a range of from about 20% to about 30% of the total area. Due to its porosity, the body 24 of the filter bag 14 is relatively flexible.

The body 24 of the filter bag 14 also includes a generally circular skirt 26, which is attached to an upper edge 28 of the body 24. The skirt 26, which is made from a relatively rigid and non-porous piece of temperature compatible polytetrafluoroethylene (preferably trademark TEFLON) or polyester (preferable trademark MYLAR), depends from the upper edge 28 of the outside of the body 24 so that the filter bag 14 can be applied to the frying basket 12 such that the body 24 of the filter bag 14 is on the inside of the frying basket 12 and the skirt 26 of the filter bag 14 is on the outside of the frying basket 12. In addition to providing a means for attaching the filter bag 14 to the frying basket 12, the skirt 26, due to the rigidity of the material from which it is made, rigidifies the otherwise the flimsy filter bag 14 to thereby prevent the filter bag 14 from collapsing when hot cooking oil is poured into it during a filtering operation. The skirt 26 is provided with a cutout 30 in the vicinity of the mounting bracket 22 to permit the filter bag 14 to be applied to the frying basket 12 in the manner described above. Other conventional means, such as snaps or clips, could be employed for attaching the filter bag 14 to the frying basket 12, thereby eliminating the need to provide the filter bag 14 with the skirt 26.

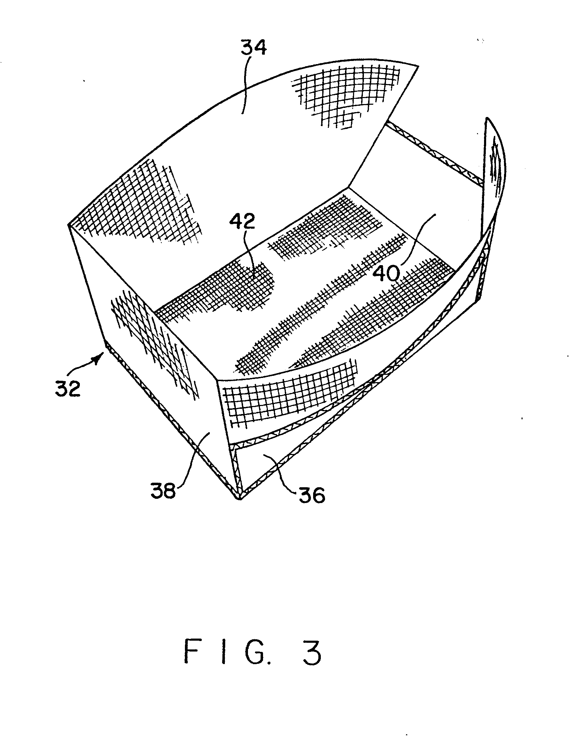

Referring now to Figure 3, a filter bag 32 is shown which is designed for use in combination with the frying basket (not shown) similar to the frying basket 12 except for having a generally rectangular shape as compared with the generally round shape of the frying basket 12. The filter bag 32 is made from two substantially identical side panels 34, 36, a tall and wide end panel 38, a short narrow end panel 40, which is sized and shaped so as not to interfere with the mounting bracket on the frying basket, and a bottom panel 42. The panels 32, 36, 38 and 40 are made from relatively rigid and non-porous pieces of temperature compatible polytetrafluoroethylene (preferably trademark TEFLON) or polyester (preferably trademark MYLAR), while the panel 42 is made from a single piece of substantially porous material similar to that used to make the body 24 of the filter bag 14. Due to the natural rigidity of the panels 34, 36, 38 and 40, the filter bag 32 is substantially freestanding, thereby eliminating the need to provide the filter bag 32 with a skirt similar to the skirt 26 employed by the filter bag 14 or with other attaching means.

Referring once again to Figures 1, 1A and 2, during a normal cooking operation, cooking oil is contained in a suitable cooking vessel (not shown). After placing the food to be cooked in the frying basket 12, the frying basket 12 would be immersed in the hot cooking oil to thereby cook the food. During the cooking operation, the cooking oil picks up impurities, such as particulate matter, soluble contaminants and food juices, from the food being cooked. In order to periodically remove these impurities from the cooking oil at the conclusion of the cooking operation, the frying basket 12 would be removed from the oil. After removing the food from the frying basket 12 and the used oil from the cooking vessel, the filter bag 14 would be applied to the frying basket 12, the resulting combination of the filter system 10 being supported in the now empty cooking vessel by any suitable means. The concept of using the frying basket 12 to support the filter bag 14 is advantageous because the body 16 of the frying basket 12 prevents the body 24 of the filter bag 14 from contacting any exposed heating elements contained in the interior of the cooking vessel, thereby preventing damage to the filter bag 14. The used cooking oil would then be poured into the filter system 10 and allowed to flow by gravity first through the filter bag 14 and then through the frying basket 12. As the used cooking oil flows back into the cooking vessel through the filter bag 14, the impurities contained in the oil are removed. Thus, the useful life of the cooking oil can be extended and the quality of the food cooked in the filtered oil can be improved.

It will be understood that the embodiments described above are merely exemplary and that persons skilled in the art may make many variations and modifications without departing from the spirit and scope of the invention. All such modifications and variations are intended to be included within the scope of the invention as defined by the appended claims.

0226413

- 6 -

1. A reusable filter bag including a filtering surface having a porosity selected so as to filter impurities from used cooking oil flowing therethrough, characterized by the combination of said reusable filter bag with a basket (12) adapted to hold food to be cooked in a cooking vessel containing said hot cooking oil, said reusable filter bag having a configuration (14, 32) adapted to conform to the shape of said basket, whereby said filter bag can be removably supported inside said basket.

2. The reusable filter bag according to Claim 1, characterized in that said basket includes a porous body made from a metal mesh.

3. The reusable filter bag according to Claim 1 or 2, characterized in that said basket is a conventional frying basket.

4. The reusable filter bag according to Claim 1 or 2, characterized in that said filter bag is made from polytetrafluoroethylene having the trademark TEFLON or polyester having the trademark MYLAR.

5. The reusable filter bag according to any one of the preceding claims, characterized in that said filter bag includes a substantially porous and non-rigid portion (24, 42) and a substantially rigid and non-porous support portion (126, 32, 34, 36, 38, 40) having a shape conforming to the shape of said basket.

6. The reusable filter bag according to Claim 5, characterized in that said substantially porous and non-rigid portion comprises the body of said filter bag and said substantially rigid and non-porous portion comprises a skirt portion depending externally from the upper rim of said body portion, said body portion comprising said filtering surface.

7.     The reusable filter bag according to Claim 6, characterized in that said body portion and said skirt portion are spaced apart whereby said body portion may be positioned inside said basket and said skirt portion may be positioned outside of said basket.

8.     The reusable filter bag according to Claim 5, characterized in that said substantially rigid and non-porous portion comprises side panels for said filter bag and said substantially porous and non-rigid portion comprises a bottom panel for said filter bag, said bottom panel forming said filtering surface.

113

0226413

28

30

26

14

24

10

FIG. 1

20

22

16

12

18

18

FIG.1A

F I G. 2

33

0226413

F I G. 3